# EUROPEAN PATENT SPECIFICATION

(11) **EP 0 867 085 B1**
(45) Date of publication and mention of the grant of the patent: **06.02.2002**
(21) Application number: 96942459.7
(22) Date of filing: 13.12.1996
(51) Int. Cl.: H04M 3/50, H04M 11/06

(54) **INTERACTIVE SERVICES**
INTERAKTIVE DIENSTE
SERVICES INTERACTIFS

(30) Priority: 15.12.1995 GB 9525753
(43) Date of publication of application: 30.09.1998
(73) Proprietor: Nortel Networks Limited, Montreal, Quebec H2Y 3Y4 (CA)
(72) Inventor: DOWNING, Anthony, Harold, Essex CB11 3EN (GB); JONES, David, Richard, Cardiff CF5 1GN (GB); LAYCOCK, John, Hants GU3 1QU (GB)
(74) Representative: Ryan, John Peter William
(86) International application number: GB9603099
(87) International publication number: WO9724826

(56) References cited:
- EP-A- 0 723 369
- WO-A-93/01665
- WO-A-94/21084
- WO-A-94/24802
- WO-A-94/27258
- DE-A- 3 207 022
- US-A- 5 550 649
- TELESIS, no. 97, December 1993, pages 35-50, XP000616855 ANDREASEN L ET AL: "ADSI: THE DAWN OF A NEW AGE OF INTERACTIVE SERVICES"

## Description

### TECHNICAL FIELD

This invention relates to the provision of interactive services to subscribers over telephone lines, and to terminal equipment to allow subscribers to use such services.

### BACKGROUND OF THE INVENTION

There is an increasing demand for interactive services such as home banking and home shopping. Typically subscribers who use such services are presented with information on some form of display device and offered a number of choices. The subscriber's choice determines the subsequent information which is displayed. As an example, a home banking service may present an initial menu of services (view balance, pay bills, transfer funds) and then respond to whatever service a user requests.

It is known to use telephone lines to deliver interactive services to dedicated terminals at a subscriber's premises. The terminal is often a computer equipped with a modem for bi-directional communication over a telephone line. The computer also has a display for a user to view information and a keyboard for a user to enter responses.

A recent protocol called ADSI (Analog Display Services Interface) devised by Bellcore defines an alternative way of providing interactive services over telephone lines. Special telephone terminals have an in-built scrollable display with a set of soft keys alongside the display. Soft keys are labelled with functions, these functions being updated as the user progresses through the service. A terminal which supports the ADSI protocol is described in the Applicants' pending United Kingdom patent application GB-2,285,897-A, and illustrated in an article entitled "ADSI : The Dawn of a new age of interactive services" by Lois Andreasen et al, published in the Bell Northern Research journal "Telesis" Issue 97, December 1993.

One of the main features of the ADSI protocol is the combination of voice and interactive data services using an off-hook signalling protocol. ADSI terminals have a high unit-cost because of the requirements for a screen, screen memory, and equipment to support the new signalling protocol. One such terminal is described in International Patent Application WO94/24802 A1.

Other types of screen-phones for use in accessing interactive services are shown in Patent Applications WO 94/27258 A1 and WO 95/06384 A1.

While there is considerable consumer interest in having access to interactive services in the home, success of such services is dependent upon the cost of the equipment which is needed in the home.

The present invention seeks to provide an alternative arrangement for enabling a subscriber to access interactive services.

### SUMMARY OF THE INVENTION

According to the present invention there is a provided an arrangement for enabling the provision of interactive services between a service provider and a subscriber, the arrangement comprising:
- a subscriber keypad telephone terminal arranged to receive display data over a telephone network from the service provider;
- a graphics device coupled to the terminal for processing the received display data whereby to generate a video signal output for display on a subscriber's television or monitor separate from the terminal; and
wherein the terminal further comprises a response generator coupled to the keypad of the terminal to enable the subscriber to generate responses for conveying back over the telephone network to the service provider.

According to a further aspect of the invention there is provided a method of providing interactive services between a service provider and a subscriber comprising:
- transmitting display data from the service provider over a telephone network to a subscriber;
- receiving the display data at a subscriber's keypad telephone terminal;
- coupling the received display data to a graphics device;
- processing the display data at the graphics device whereby to generate a video signal output;
- displaying the video signal on a subscriber's television or monitor separate from the terminal; and,
- conveying to the service provider subscriber responses generated by the subscriber using the telephone keypad and a response generator within the terminal.

This has the advantage of offering interactive services to subscribers without the need for subscribers to have dedicated terminal equipment or a personal computer acting as a terminal. It also avoids the need for an expensive screen-phone as in the ADSI system. The use of a subscribers existing television set or monitor reduces the cost of equipment which is needed. It also provides a large, easy-to-read display which can readily display text and colour graphics which has advantages over the monochrome liquid-crystal displays used in ADSI screen-phones.

Preferably the display data is in the form of modem tones and the subscriber's telephone terminal has a demodulator to decode the tones. Preferably the modem tones are of the format used to send calling line identification (CLI) information to a terminal, the terminal being operable to use the demodulator to detect bursts of CLI or the display data. This also has an advantage of saving cost of the equipment.

Preferably the response generator comprises a multi-frequency tone generator. This type of generator is a standard component of a modern telephone terminal as it is used to generate signalling tones at call set-up.

Transport between the service provider and subscriber preferably comprises a series of cycles, each cycle comprising a handshaking period, a display data transmission period, and a subscriber response transmission period, with the terminal buffering subscriber responses during the handshaking and display data transmission periods. This protocol prevents subscriber keypresses interfering with the transmission of incoming display data.

The graphics device preferably includes a teletext generator for converting the display data into a teletext image. Teletext offers text and limited graphics in colour. Teletext compiles a display from a series of character codes and therefore requires a minimum of data to construct an image. Thus a complete screen of information can be presented after a short delay and requires only a small memory device to store the image. The graphics device may be incorporated into a cable television or satellite television set-top box. Incorporating the graphics device into the set-top box has the advantage of using an existing on-screen text generator, and further reduces the cost of implementing this service.

### BRIEF DESCRIPTION OF THE DRAWINGS

An embodiment of the invention will now be described by way of example only, with reference to the accompanying drawings, in which:
Figure 1 schematically shows an arrangement for providing interactive services in accordance with the embodiment of the invention;
Figure 2 shows a telephone terminal used in the arrangement of figure 1 in more detail;
Figure 3 shows a graphics device used in the arrangement of figure 1 in more detail, and;
Figure 4 shows the interface between the telephone terminal and graphics device of figures 1 to 3 in more detail;
Figure 5 shows a preferred form of signalling protocol for delivering interactive services between the service provider and subscriber of figure 1.

### DESCRIPTION OF PREFERRED EMBODIMENTS

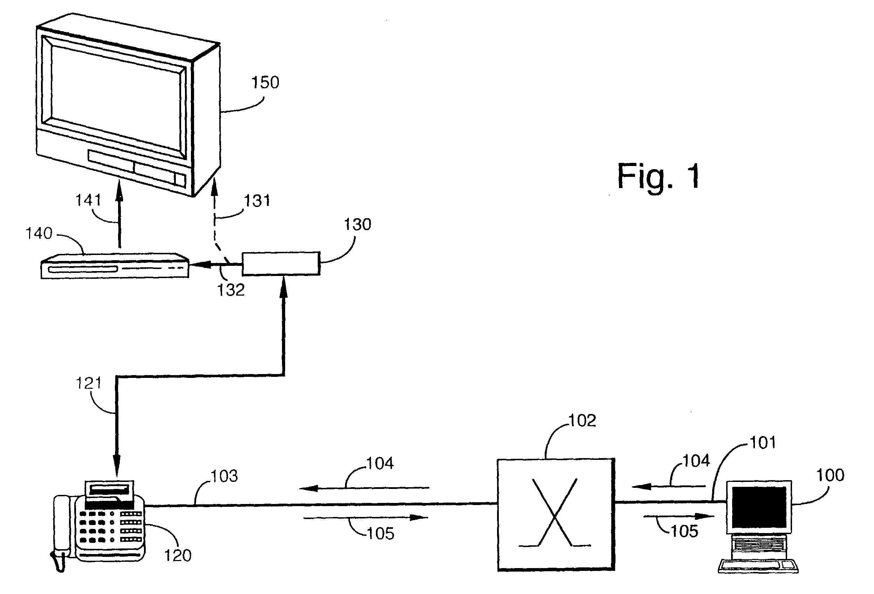

Figure 1 schematically shows a system according to the embodiment of the present invention. A service provider 100 such as a bank, is coupled by telephone network 101, 102, 103 to a subscriber's telephone terminal 120. Line 103 between subscriber terminal 120 and exchange 102 may comprise a standard local subscriber loop. The telephone network may be provided as part of a cable television (CATV) network. Communication between service provider 100 and subscriber terminal 120 is in two directions; a forward path 104 from service provider 100 to subscriber terminal 120, and a return path 105 from subscriber terminal 120 to service provider 100. Terminal 120 is adapted to process, interactive services, in a manner which will be further described. Terminal 120 is also coupled to a graphics device 130. A video signal is delivered from the device to a television set 150 directly 131, or in the case of cable TV or satellite TV customers, via a set-top box 140.

The incremental cost of providing this service is based almost solely on the cost of producing the graphics device 130.

While the cheapest option for providing link 121 between telephone 120 and graphics device 130 is by cable, it may alternatively be achieved by a wireless link such as a low power radio or infra-red link.

A domestic television or monitor is used to provide the subscriber's display output whilst the telephone keypad is used as the subscriber's input device. To connect to a service the subscriber places the telephone into display service mode and dials a service. Both of these functions will normally be effected by a single press of a programmable or dedicated key on the terminal. The calling line identity of the subscriber's terminal is received by the service provider. As a security measure, the CLI is checked against a PIN which the subscriber is asked to enter. After a short delay to transmit display data, the information is displayed on a television set 150 along with menus. The subscriber uses the number, hash and star keys of the terminal keypad to request menu items and enter information such as account numbers. The subscriber can terminate the call to the service at any time in the usual manner, such as by lifting and dropping the handset or pressing the release key.

Preferably the telephone terminal 120 is a telephone offering Custom Local Area Signalling Services (CLASS) which has been modified to process interactive services. These telephones contain the receiving function of a modem i.e. a frequency shift key decoder, which is used to receive Calling Line Identification from the exchange. The tones and timing used for this are compatible with those of a CCITT V23 modem transmitting at 1200 baud, but there is no provision in conventional telephones for a return channel from the telephone or even of filtering in the telephone to protect the received data from any returned signals.

A return path to convey user responses to the service provider is provided using DTMF tones. The protocol which multiplexes the forward and return paths will be described in more detail later.

Service provider 100 typically has a modem pool (not shown) to allow communication with a number of subscribers over the telephone network. Modems typically are able to detect modem tones and DTMF tones, and there will therefore be minimal cost in upgrading existing modem control software at the service provider to adapt to this new method of transport.

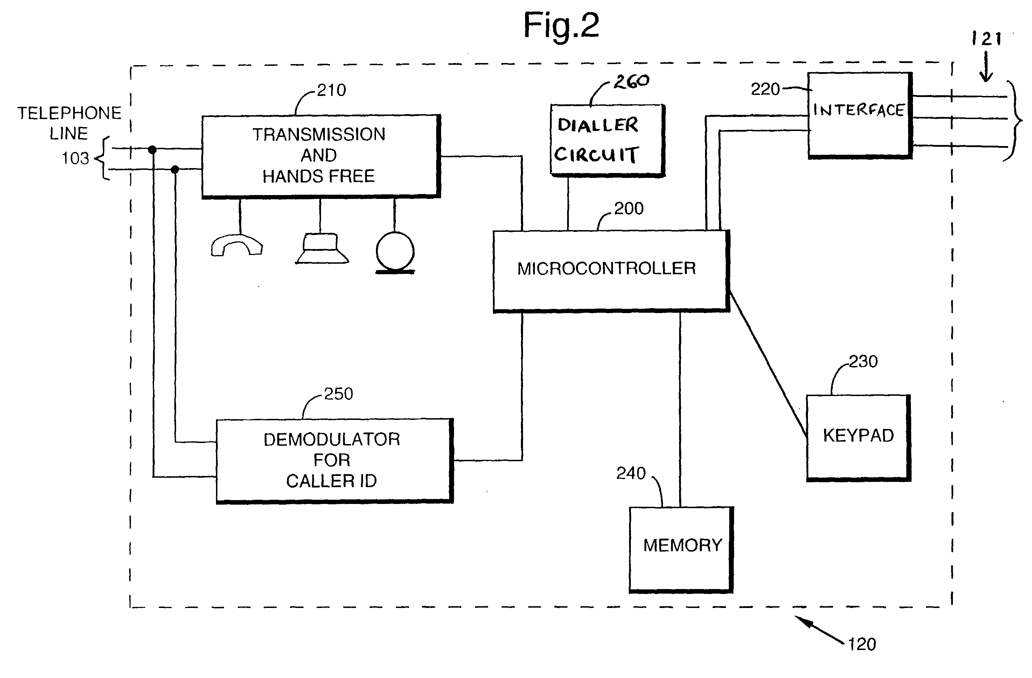

Figure 2 is a block diagram of the terminal 120 shown in figure 1. Subscriber telephone line 103 is coupled to transmission and handsfree block 210 and caller ID demodulator 250. Caller ID demodulator decodes FSK tones which are used to send caller identification information and display data for the information services. In addition, the demodulator 250 also detects the 1300Hz modem handshaking tone. Dialler circuit 260 generates DTMF tones in response to keypresses, under the control of microcontroller 200. Memory 240 is used, *inter-alia* to store subscriber keypresses during certain periods during display service mode.

Operation of all blocks within the terminal is controlled by microcontroller 200 which has an associated memory 240. Interface 220 which couples terminal 120 to the graphics device comprises a serial data output port having data output line, control line, and a power line. This is conveniently an RS232 interface.

Software modifications to the telephone allow modem standard hand-shaking to be used. In particular, a software modification allows the telephone to detect the 1300Hz hand-shaking tone sent by the service provider. A further software modification allows microcontroller 200 to generate a 390Hz tone to reply to the service provider. These software modifications add a negligible cost to the telephone.

The main hardware modification to the telephone is to opto-isolate the interface where data is passed on to graphics device 130.

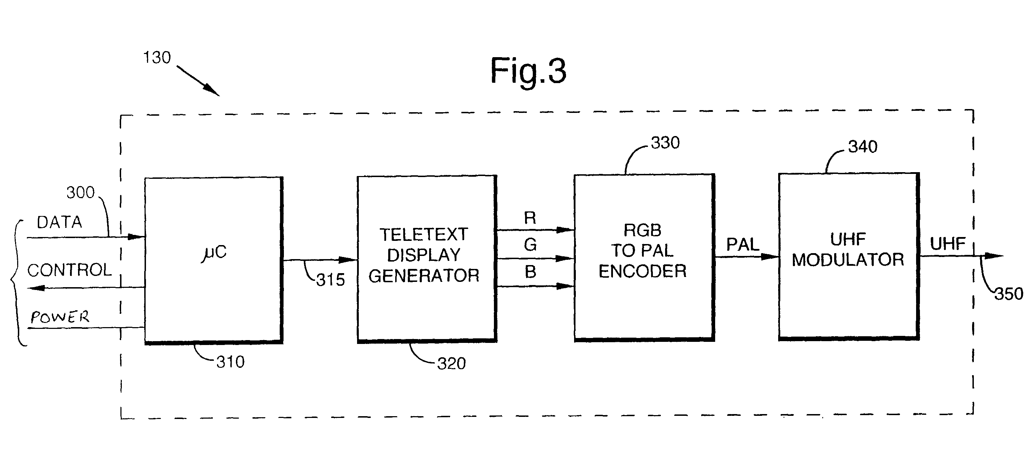

Figure 3 shows a preferred form of the graphics device 130 in more detail. Serial data at 1200 baud is passed along data line 300 to the device. Micro-controller 310 receives the data and toggles the control line to the telephone. Data is formatted for teletext display and written into a teletext display generator 320. The link between micro controller 310 and teletext generator 320 may be an I²C bus. Teletext generator 320 issues an RGB signal which is encoded to PAL, or some other colour format, before modulation onto a suitable UHF carrier. It will be appreciated that the video signal may be tapped in the RGB or baseband PAL form for direct coupling to a suitably equipped display device. The graphics device is powered by a low voltage supply from a suitable mains transformer.

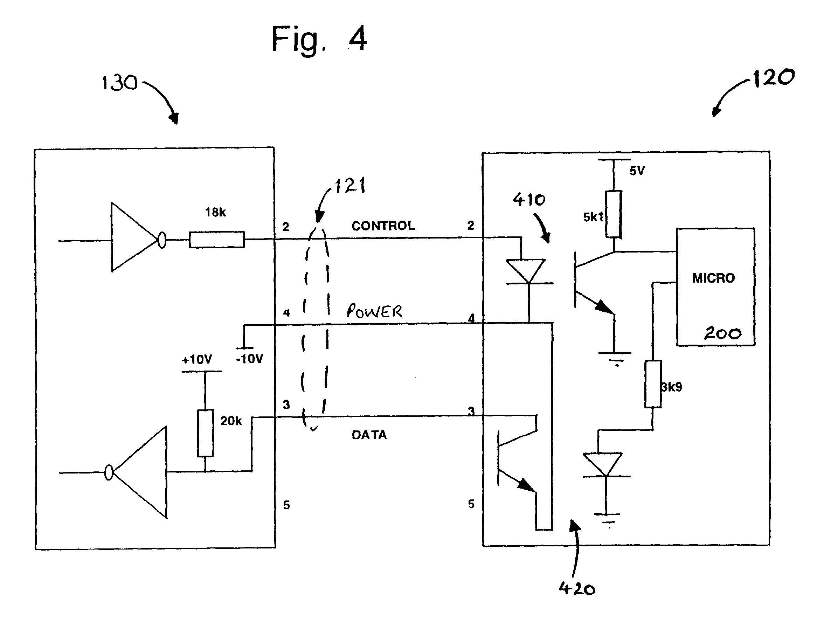

Figure 4 shows the interface between terminal 120 and graphics device 130 in more detail. The link between the two devices comprises a data line (DATA), control line (CONTROL) and a power line. The data line and control line between terminal 120 and graphics device 130 are electrically isolated by opto-isolating circuits 410, 420 in terminal 120 to provide protection to and from the PSTN. Power line (POWER) provides a power supply from the graphics device to the terminal to power the opto-isolating circuits 410, 420. Conveniently, the terminal is provided with a second handset jack, the link between the terminal and graphics device comprising a 4-way cord having an RJ-11 plug at the terminal end and a 4-way line-jack plug at the graphics device end.

UHF output 350 may be coupled directly to a UHF aerial input of a television set. Alternatively, it may be coupled to the television set via the UHF input of a video or a cable television or satellite television set-top box.

In setting-up the system, the user connects terminal 120 to graphics device 130 and switches television set/monitor 150 to an appropriate channel to receive the output of the graphics device. The user then powers up the graphics device and watches for a default greeting message on the television. Graphics device 130 monitors link 121 to check if terminal 120 has been properly connected. In the state where the terminal is connected but no display data is being transmitted, the data line is held low. If the graphics device detects that the data line is held high then it displays a message such as "Plug in Phone", this message being stored in memory (not shown) associated with micro controller 310. A further check is performed when the user selects the auto-dial key to select the interactive service. Terminal 120 monitors the control line (CONTROL) to check if graphics device 130 has been properly connected. If the graphics device has not been connected, then the terminal will display a message "No Display Unit".

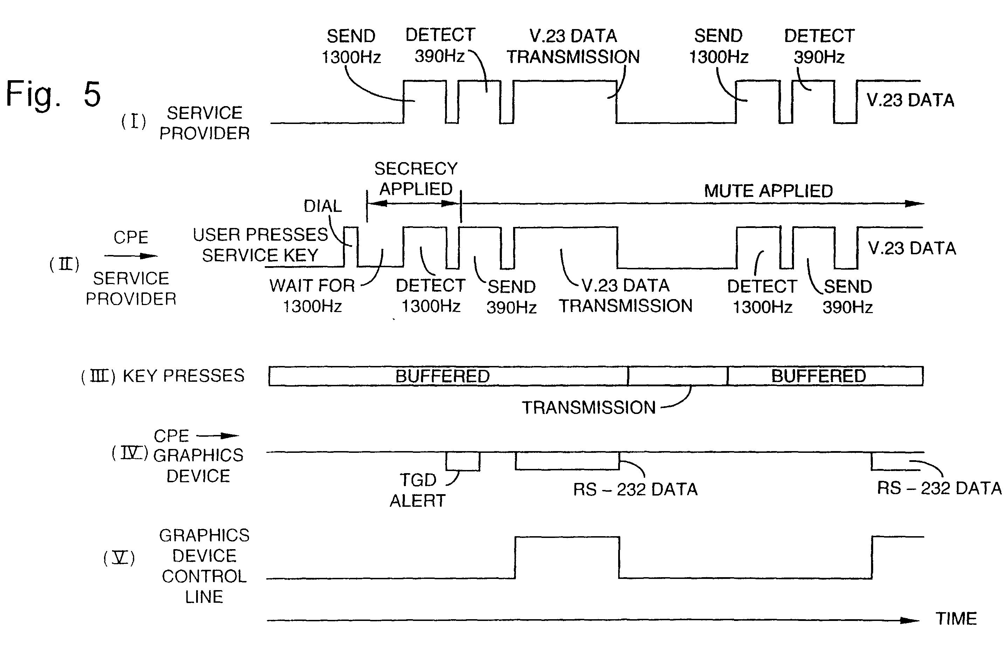

The transport protocol for delivering services will now be described in more detail, with reference to figure 5. Figure 5 shows the signalling for five parts of the system over a common time period. The parts of the system shown are (i) the service provider, (ii) the Customer Premises Equipment (CPE) or subscriber's telephone terminal, (iii) keypresses, (iv) signalling between the CPE and graphics device, and (v) the graphics device.

Microcontroller 200 monitors the duration of the 1300Hz tone (defined in the V23 standard as 300ms to 700ms).

A customer places the telephone into the display service mode and auto-dials the display service by pressing a programmable key. The display service provider is equipped with a V23 modem and hence expects the normal call set-up/handshaking detailed in the standard, namely, the display service sends a 1300 Hz tone which is detected by the telephone. Microcontroller 200 monitors the duration of the 1300Hz tone (defined in the V.23 standard as 300ms to 700ms). The telephone responds with a 390 Hz tone. In this protocol the 390 Hz tone is only sent long enough for the display service modem to enter the carrier detect/data transfer mode, as a continuous tone could interfere with the wanted data reception. At this time any keypresses are buffered to prevent interference with the set-up signalling. The data is sent at 1200 baud FSK by the display service modem to the telephone where it is demodulated into a baseband serial data stream. The terminal passes the data stream to the graphics device. On recognising valid data the graphics device raises a control line which is then dropped at the end of a block of valid data.

On identifying the falling edge of the control line the terminal is allowed to dial out any buffered key presses as DTMF tones to the display service. At all other times keypresses are buffered so as not to interfere with data transfer. If, whilst dialling out the buffered keys, the user dials any other keys these are also dialled out. Once the key buffer has emptied the terminal enters key buffering mode. As the key presses are buffered and sent under control of the telephone as opposed the user (see line (iii)), the delay between each DTMF transmission is fixed and hence the display service provider receiving these can identify when no tones are received within a fixed period that the transmission is complete. Typically the service provider operates a 150ms lack of tone time-out. When dialling out buffered keypresses, the terminal controls the duration of the DTMF tones corresponding to each keypress. The cycle of handshaking and data transfer described above then resumes. During periods when the display service has no data to send, a no operation (NOP) data package is sent to the terminal and on to the graphics device. This ensures the control line continues to be toggled and hence any key presses will be released from the telephone buffer. In addition it ensures that all devices participating in the protocol can expect an action to occur within a quantifiable period and they can then take action, such as notifying the user, if communication appears to be lost.

Both the service provider 100 and subscriber equipment maintain counters for a time-out period to monitor for a disruption to the service.

While using the service, the telephone handset and handsfree microphone and speaker are muted so that a user will not hear the modem and DTMF tones.

A CLASS telephone is capable of receiving V.23 data. A software modification allows the telephone to receive the longer bursts of screen data, rather than the usual short burst of caller identification data. A further software/hardware modification allows the telephone to detect the 1300 Hz tone from the service provider. Another software modification allows the telephone to generate a 390 Hz tone. Software modifications add a negligible cost to the telephone.

The graphics device may be supplied as a stand-alone unit or incorporated into the set-top box of a cable TV installation. A set-top box often incorporates a teletext generator to issue on-screen commands to a user and may also be used to display the interactive service information. A combination of the set-top box and graphics device will therefore reduce the cost of the equipment required to support this form of transport still further.

Alternatively, the graphics device may be incorporated into the telephone terminal, such that the terminal outputs a video signal for direct connection to a television or monitor.

One form of service for which this arrangement will be particularly suited is that of home-banking, where features such as viewing an account balance and recent account transactions, paying bills and transferring funds can be easily achieved.

A further service which can be implemented is that of connection to the Internet for browsing the World Wide Web (WWW). For this, the service provider acts as a gateway to the Internet. On the forward path to the subscriber the gateway receives Hypertext (HTML) display pages and translates them to teletext pages which, when received by a subscriber's telephone, can be passed to the graphics device and correctly interpreted.

Internet information pages contain linkwords which, when selected, lead the user on to another page. Users who access the Internet through a PC use a mouse to highlight these linkwords. Subscribers who use a conventional telephone keypad for their responses cannot select linkwords in this manner. One solution is to provide the telephone with a pointing device. An alternative solution is to provide each page of information with a translated table of menu commands. The translated menu provides a list of keys corresponding to linkwords appearing in the original HTML display pages. By pressing one of these keys the subscriber can progress through the service. On the return path from the subscriber the service provider converts a subscriber's keypress to a selection of a particular Hypertext linkword. A connection to the Internet is therefore provided at a low cost to a subscriber. Preferably four of the user-programmable keys of terminal 120 are colour-coded and are programmed to generate responses to the gateway. The colour of the keys corresponds to colour-coded linkwords in the teletext display. To enable a subscriber to make alphanumeric responses to pages the terminal may be provided with an extended keypad of alphanumeric keys.

The output teletext display is restricted to 40 columns and 25 rows. Each character cell can contain a character derived from the Teletext character set. Combinations of characters can be used to form graphics and coloured effects in the standard manner of Teletext displays. Rather than supporting sideways scrolling, and adding to the complexity of the control process, text is always word-wrapped. This output display is mapped onto a virtual output page that is 40 columns but an effectively unlimited number of rows.

The range of responses that a subscriber can make on his terminal is limited to the number keys 0-9 and the '#' and '*' symbols on the terminal keypad. With the use of colour-coded programmable keys on the terminal, code sequences '**0' through '**3' are used to 'trigger' HTML anchors. The four programmable keys are coloured red, green, yellow and cyan. The anchor/input on the display is coloured to match the key. Anchors/inputs that are visible but have no matching key are coloured magenta. The '#' code is interpreted to mean 'more'. This steps the page to the next logical state downwards, either the next set of four anchors/inputs, or the next page of the text, or both. When the last page of the document is reached the next step returns to the start.

Each document is given two pseudo anchors, 'home' and 'back', present at the bottom of the last page. 'Home' has the effect of returning to the 'home page'. This is the first page that the system presents and is configured in the gateway. 'Back' returns to the previous page. The return stack is of necessity limited in size and so cannot be guaranteed available. The 'home' command is always available.

Graphics that have Teletext equivalents are pasted onto the page. Where graphics do not have Teletext equivalents HTML '<img>' tags are inspected to check if they have a an associated 'alt' field containing text. This will be used to replace the image should there not be a Teletext equivalent of the image.

## Claims

1. An arrangement for enabling the provision of interactive services between a service provider and a subscriber, the arrangement comprising:
- a subscriber keypad telephone terminal arranged to receive display data over a telephone network from the service provider;
- a graphics device coupled to the terminal for processing the received display data whereby to generate a video signal output for display on a subscriber's television or monitor separate from the terminal; and
wherein the terminal further comprises a response generator coupled to the keypad of the terminal to enable the subscriber to generate responses for conveying back over the telephone network to the service provider.

2. An arrangement according to claim 1 wherein the display data is in the form of modem tones, the subscriber's telephone terminal having a demodulator to decode the tones.

3. An arrangement according to claim 2 wherein the modem tones are of the format used to send Calling Line Identification (CLI) information to a terminal, the terminal being operable to use the demodulator to detect bursts of CLI or the display data.

4. An arrangement according to any preceding claim wherein the response generator comprises a multi-frequency tone generator.

5. An arrangement according to any preceding claim arranged such that transport between the service provider and subscriber comprises a series of cycles, each cycle comprising a handshaking period, a display data transmission period, and a subscriber response transmission period and wherein a buffer at the terminal buffers subscriber responses during the handshaking and display data transmission periods.

6. An arrangement according to any preceding claim wherein the graphics device includes a teletext generator for converting the display data into a teletext image.

7. An arrangement according to any preceding claim wherein the graphics device is incorporated into a set-top box.

8. An arrangement according to claim 7 wherein the set-top box is a cable television set-top box.

9. An arrangement according to claim 7 wherein the set-top box is a satellite television set-top box.

10. An arrangement according to any preceding claim wherein the graphics device is coupled to the terminal by a wireless link.

11. An arrangement according to any preceding claim wherein the graphics device generates a video signal which is modulated onto a UHF carrier for coupling to a UHF input of the subscriber's television.

12. An arrangement according to any one of claims 1 to 6 wherein the graphics device is incorporated into the telephone terminal.

13. A method of providing interactive services between a service provider and a subscriber comprising:
- transmitting display data from the service provider over a telephone network to a subscriber;
- receiving the display data at a subscriber's keypad telephone terminal;
- coupling the received display data to a graphics device;
- processing the display data at the graphics device whereby to generate a video signal output;
- displaying the video signal on a subscriber's television or monitor separate from the terminal; and,
- conveying to the service provider subscriber responses generated by the subscriber using the telephone keypad and a response generator within the terminal.

14. A method according to claim 13 wherein the subscriber responses to the service provider are in the form of multi-frequency tones.

15. A method according to claim 13 or 14 wherein transport between the service provider and subscriber comprises a series of cycles, each cycle comprising a handshaking period, a display data transmission period, and a subscriber response transmission period, and wherein the terminal buffers subscriber responses during the handshaking and display data transmission periods.

16. A method according to claim 15 wherein during the handshaking period the service provider transmits a first tone to the terminal, and the terminal, in response to correctly detecting the first tone, generates a second tone to transmit to the service provider.

17. A method according to claim 15 or 16 wherein if the service provider has no display data to send, a data packet is sent to the terminal during the display data transmission period.

18. A method according to any one of claims 15 to 17 wherein a control line links the graphics device to the terminal, the graphics device signalling on the control line the end of the display data transmission period to inform the terminal of the start of the subscriber response transmission period.

19. A method according to any one of claims 14 to 18 wherein the modem tones are transmitted according to CCITT V23 standard.

20. A method according to any one of claims 13 to 19 further comprising the service provider receiving an HTML display page and translating it into display data, the display data including a translated table of menu commands providing a list of keys that a subscriber can press which correspond to linkwords in the HTML display page.

21. A method according to any one of claims 13 to 19 further comprising the service provider receiving an HTML display page and translating it into display data, the display data including HTML linkwords which are colour-coded with coloured keys on the terminal, which keys are programmed to generate responses to the service provider.

22. A subscriber keypad telephone terminal for enabling the provision of interactive services between a service provider and a subscriber, the terminal comprising:
- means for receiving display data from the service provider over a telephone network;
- a graphics device for processing the received display data to generate a video signal output for display on a subscriber's television or monitor separate from the terminal; and
- a response generator coupled to the keypad of the terminal to enable the subscriber to generate responses for conveying back over the telephone network to the service provider.

23. A subscriber terminal as claimed in claim 22, wherein the received display data comprises Calling Line Identification (CLI) data.

## Patentansprüche

1. Anordnung zur Ermöglichung der Bereitstellung von interaktiven Diensten zwischen einem Diensteanbieter und einem Teilnehmer, wobei die Anordnung folgendes umfaßt:
- ein Teilnehmer-Tastentelefon-Endgerät, das so ausgebildet ist, daß es Anzeigedaten über ein Telefonnetz von dem Diensteanbieter empfängt;
- ein Graphikgerät, das mit dem Endgerät verbunden ist, um die empfangenen Anzeigedaten zu verarbeiten, um auf diese Weise einen Videosignalausgang zur Anzeige auf einem Fernseher oder Monitor des Teilnehmers zu erzeugen, der von dem Endgerät getrennt ist; und
wobei das Endgerät weiterhin einen Antwortgenerator umfaßt, der mit der Tastatur des Endgeräts gekoppelt ist, um es dem Teilnehmer zu ermöglichen, Antworten zur Zurücklieferung über das Telefonnetz an den Diensteanbieter zu erzeugen.

2. Anordnung nach Anspruch 1, bei der die Anzeigedaten die Form von Modem-Tönen aufweisen, wobei das Telefon-Endgerät des Teilnehmers einen Demodulator zur Dekodierung der Töne aufweist.

3. Anordnung nach Anspruch 2, bei dem die Modem-Töne das Format aufweisen, das zum Senden der Rufnummernanzeige-ldentifikations- (CLI-) Information an ein Endgerät verwendet wird, wobei das Endgerät betreibbar ist, um den Demodulator zur Detektion von Blöcken von CLI- oder der Anzeige-Daten zu verwenden.

4. Anordnung nach einem der vorhergehenden Ansprüche, bei dem der Antwortgenerator einen Mehrfrequenz-Tongenerator umfaßt.

5. Anordnung nach einem der vorhergehenden Ansprüche, die derart angeordnet ist, das der Transport zwischen dem Diensteanbieter und dem Teilnehmer eine Serie von Zyklen umfaßt, wobei jeder Zyklus eine Quittungsaustausch-Periode, eine Anzeigedaten-Übertragungsperiode und eine Teilnehmerantwort-Übertragungsperiode umfaßt, und wobei ein Puffer an dem Endgerät Teilnehmerantworten während der Quittungsaustausch- und Anzeigedaten-Übertragungsperioden puffert.

6. Anordnung nach einem der vorhergehenden Ansprüche, bei der das Graphikgerät einen Teletext-Generator zum Umwandlung der Anzeigedaten in ein Teletext-Bild einschließt.

7. Anordnung nach einem der vorhergehenden Ansprüche, bei der das Graphikgerät in ein Aufsatzgehäuse eingefügt ist.

8. Anordnung nach Anspruch 7, bei der das Aufsatzgerät ein Kabelfernseh-Aufsatzgerät ist.

9. Anordnung nach Anspruch 7, bei der das Aufsatzgerät ein Satellitenfernseh-Aufsatzgerät ist.

10. Anordnung nach einem der vorhergehenden Ansprüche, bei der das Graphikgerät mit dem Endgerät über eine drahtlose Verbindungsstrecke gekoppelt ist.

11. Anordnung nach einem der vorhergehenden Ansprüche, bei dem das Graphikgerät ein Videosignal erzeugt, das auf einen UHF-Träger zum Koppeln mit einem UHF-Eingang des Fernsehgeräts des Teilnehmers moduliert ist.

12. Anordnung nach einem der Ansprüche 1 bis 6, bei der das Graphikgerät in das Telefon-Endgerät eingefügt ist.

13. Verfahren zur Bereitstellung interaktiver Dienste zwischen einem Diensteanbieter und einem Teilnehmer, mit:
- der Aussendung von Anzeigedaten von dem Diensteanbieter über ein Telefonnetz zu einem Teilnehmer;
- dem Empfang der Anzeigedaten an einem Tastentelefon-Endgerät des Teilnehmers;
- dem Koppeln der empfangenen Anzeigedaten an ein Graphikgerät;
- der Verarbeitung der Anzeigedaten in dem Graphikgerät, wodurch ein VideosignalAusgang erzeugt wird;
- der Anzeige des Videosignals auf einem von dem Endgerät getrennten Fernseher oder Monitor des Teilnehmers; und
- der Übertragung von Teilnehmer-Antworten, die von dem Teilnehmer unter Verwendung der Telefontastatur und eines in dem Endgerät befindlichen Antwortgenerators erzeugt werden, an den Diensteanbieter

14. Verfahren nach Anspruch 13, bei dem die Teilnehmerantworten an den Diensteanbieter die Form von Mehrfrequenz-Tönen aufweisen.

15. Verfahren nach Anspruch 13 oder 14, bei dem der Transport zwischen dem Diensteanbieter und dem Teilnehmer eine Serie von Zyklen umfaßt, wobei jeder Zyklus eine Quittungsaustausch-Periode, eine Anzeigedaten-Übertragungsperiode und eine Teilnehmerantwort-Übertragungsperiode umfaßt, und bei dem das Endgerät Teilnehmerantworten während der Quittungsaustausch- und Anzeigedaten-Übertragungsperioden puffert.

16. Verfahren nach Anspruch 15, bei dem der Diensteanbieter während der Quittingsaustausch-Periode einen ersten Ton an das Endgerät aussendet, und das Endgerät als Antwort auf die richtige Detektion des ersten Tons einen zweiten Ton zur Aussendung an den Diensteanbieter erzeugt.

17. Verfahren nach Anspruch 15 oder 16, bei dem, wenn der Diensteanbieter keine Anzeigedaten zu senden hat, ein Datenpaket an das Endgerät während der Anzeigedaten-Übertragungsperiode ausgesandt wird.

18. Verfahren nach einem der Ansprüche 15 bis 17, bei dem eine Steuerleitung das Graphikgerät mit dem Endgerät verbindet, wobei das Graphikgerät auf der Steuerleitung das Ende der Anzeigedaten-Übertragungsperiode signalisiert, um das Endgerät über den Beginn der Teilnehmerantwort-Übertragungsperiode zu informieren.

19. Verfahren nach einem der Ansprüche 14 bis 18, bei dem die Modem-Töne nach der CCITT V23-Norm ausgesandt werden.

20. Verfahren nach einem der Ansprüche 13 bis 19, das weiterhin den Empfang einer HTML-Anzeigeseite und deren Umsetzung in Anzeigedaten durch den Diensteanbieter umfaßt, wobei die Anzeigedaten eine übersetzte Tabelle von Menübefehlen einschließen, die eine Liste von Tasten liefert, die ein Teilnehmer drücken kann und die Verkettungsworten in der HTML-Anzeigeseite entsprechen.

21. Verfahren nach einem der Ansprüche 13 bis 19, bei dem weiterhin der Diensteanbieter eine HTML-Anzeigeseite empfängt und diese in Anzeigedaten umwandelt, wobei die Anzeigedaten HTML-Verkettungsworte einschließen, die mit eingefärbten Tasten auf dem Endgerät farbkodiert sind, wobei diese Tasten so programmiert sind, daß sie Antworten an den Diensteanbieter erzeugen.

22. Teilnehmer-Tastentelefon-Endgerät zur Ermöglichung der Bereitstellung von interaktiven Diensten zwischen einem Diensteanbieter und einem Teilnehmer, wobei das Endgerät folgendes umfaßt:
- Einrichtungen zum Empfang von Anzeigedaten über ein Telefonnetz von dem Diensteanbieter;
- ein Graphikgerät zur Verarbeitung der empfangenen Anzeigedaten zur Erzeugung eines Videosignalausgangs zur Anzeige auf einem von dem Endgerät getrennten Fernseher oder Monitor des Teilnehmers; und
- einen Antwortgenerator, der mit der Tastatur des Endgeräts gekoppelt ist, um es dem Teilnehmer zu ermöglichen, Antworten zur Zurücklieferung über das Telefonnetz an den Diensteanbieter zu erzeugen.

23. Teilnehmer-Endgerät nach Anspruch 22, bei dem die empfangenen Anzeigedaten Rufnummernanzeige-ldentifikations- (CLI-) Daten umfassen.

## Revendications

1. Agencement pour permettre la fourniture de services interactifs entre un gestionnaire de service et un abonné, l'agencement comprenant :
- un terminal téléphonique à touches chez l'abonné agencé pour recevoir des données d'affichage à travers un réseau téléphonique en provenance du gestionnaire de service;
- un dispositif graphique couplé au terminal pour traiter les données d'affichage reçues de manière à générer une sortie de signal vidéo pour l'affichage sur un téléviseur ou moniteur de l'abonné, séparé du terminal; et
dans lequel le terminal comprend en outre un générateur de réponse couplé aux touches du terminal pour permettre à l'abonné de générer des réponses à réacheminer à travers le réseau téléphonique au gestionnaire de service.

2. Agencement selon la revendication 1, dans lequel les données d'affichage se présentent sous forme de tonalités de modem, le terminal téléphonique de l'abonné comportant un démodulateur pour décoder les tonalités.

3. Agencement selon la revendication 2, dans lequel les tonalités de modem ont le format utilisé pour envoyer des informations d'identification du poste appelant (CLI) à un terminal, le terminal étant capable d'utiliser le démodulateur pour détecter des rafales de données CLI ou les données d'affichage.

4. Agencement selon l'une quelconque des revendications précédentes, dans lequel le générateur de réponse comprend un générateur de tonalités multifréquence.

5. Agencement selon l'une quelconque des revendications précédentes, agencé de sorte que le transport entre le gestionnaire de service et l'abonné comprend une série de cycles, chaque cycle comprenant une période de mise en liaison, une période de transmission de données d'affichage, et une période de transmission de réponse de l'abonné, et dans lequel un tampon au niveau du terminal tamponne des réponses d'abonné pendant les périodes de mise en liaison et de transmission de données d'affichage.

6. Agencement selon l'une quelconque des revendications précédentes, dans lequel le dispositif graphique comprend un générateur de télétexte pour convertir les données d'affichage en une image télétexte.

7. Agencement selon l'une quelconque des revendications précédentes, dans lequel le dispositif graphique est intégré dans un boîtier de connexion externe.

8. Agencement selon la revendication 7, dans lequel le boîtier de connexion externe est un boîtier de connexion externe de télévision par câble.

9. Agencement selon la revendication 7, dans lequel le boîtier de connexion externe est un boîtier de connexion externe de télévision par satellite.

10. Agencement selon l'une quelconque des revendications précédentes, dans lequel le dispositif graphique est couplé au terminal par une liaison sans fil.

11. Agencement selon l'une quelconque des revendications précédentes, dans lequel le dispositif graphique génère un signal vidéo qui est modulé sur une porteuse UHF pour un couplage à une entrée UHF du téléviseur de l'abonné.

12. Agencement selon l'une quelconque des revendications 1 à 6, dans lequel le dispositif graphique est intégré dans le terminal téléphonique.

13. Procédé de fourniture de services interactifs entre un gestionnaire de service et un abonné, comprenant les étapes consistant à :
- transmettre des données d'affichage du gestionnaire de service à travers un réseau téléphonique à un abonné;
- recevoir les données d'affichage au niveau d'un terminal téléphonique à touches de l'abonné;
- coupler les données d'affichage reçues à un dispositif graphique;
- traiter les données d'affichage au niveau du dispositif graphique de manière à générer une sortie de signal vidéo;
- afficher le signal vidéo sur un téléviseur ou moniteur de l'abonné, séparé du terminal; et
- acheminer au gestionnaire de service les réponses d'abonné générées par l'abonné à l'aide des touches du téléphone et d'un générateur de réponse dans le terminal.

14. Procédé selon la revendication 13, dans lequel les réponses d'abonné au gestionnaire de service se présentent sous la forme de tonalités multifréquence.

15. Procédé selon la revendication 13 ou 14, dans lequel le transport entre le gestionnaire de service et l'abonné comprend une série de cycles, chaque cycle comprenant une période de mise en liaison, une période de transmission de données d'affichage et une période de transmission de réponses d'abonné, et dans lequel le terminal tamponne des réponses d'abonné pendant les périodes de mise en liaison et de transmission de données d'affichage.

16. Procédé selon la revendication 15, dans lequel, pendant la période de mise en liaison, le gestionnaire de service transmet une première tonalité au terminal, et le terminal, en réponse à la détection correcte de la première tonalité, génère une deuxième tonalité à transmettre au gestionnaire de service.

17. Procédé selon la revendication 15 ou 16, dans lequel si le gestionnaire de service n'a pas de données d'affichage à envoyer, un paquet de données est envoyé au terminal pendant la période de transmission de données d'affichage.

18. Procédé selon l'une quelconque des revendications 15 à 17, dans lequel une ligne de commande relie le dispositif graphique au terminal, le dispositif graphique signalant sur la ligne de commande la fin de la période de transmission de données d'affichage pour informer le terminal du début de la période de transmission de réponse d'abonné.

19. Procédé selon l'une quelconque des revendications 14 à 18, dans lequel les tonalités de modem sont transmises selon la norme CCITT V23.

20. Procédé selon l'une quelconque des revendications 13 à 19, comprenant en outre le fait que le gestionnaire de service reçoit une page d'affichage HTML et la traduit en données d'affichage, les données d'affichage comprenant une table traduite de commandes de menu fournissant une liste de touches qu'un abonné peut actionner qui correspond aux liens sur la page d'affichage HTML.

21. Procédé selon l'une quelconque des revendications 13 à 19, comprenant en outre le fait que le gestionnaire de service reçoit une page d'affichage HTML et la traduit en données d'affichage, les données d'affichage comprenant des liens HTML qui ont un code couleur avec des touches colorées sur le terminal, ces touches étant programmées pour générer des réponses à destination du gestionnaire de service.

22. Terminal téléphonique à touches chez l'abonné destiné à permettre la fourniture de services interactifs entre un gestionnaire de service et un abonné, le terminal comprenant :
- des moyens pour recevoir des données d'affichage provenant du gestionnaire de service à travers un réseau téléphonique;
- un dispositif graphique pour traiter les données d'affichage reçues pour générer une sortie de signal vidéo destinée à l'affichage sur un téléviseur ou un moniteur de l'abonné, séparé du terminal; et
- un générateur de réponse couplé aux touches du terminal pour permettre à l'abonné de générer des réponses à réacheminer à travers le réseau téléphonique au gestionnaire de service.

23. Terminal d'abonné selon la revendication 22, dans lequel les données d'affichage reçues comprennent des données d'identification de poste appelant (CLI).
